## Europäisches Patentamt
## European Patent Office
## Office européen des brevets

(19)

(11) Veröffentlichungsnummer: **0 086 264**
**B1**

(12) # EUROPÄISCHE PATENTSCHRIFT

(45) Veröffentlichungstag der Patentschrift:
**21.08.85**

(51) Int. Cl.⁴: **B 23 D 79/00,** B 23 K 20/08

(21) Anmeldenummer: **82110633.3**

(22) Anmeldetag: **18.11.82**

(54) Vorrichtung zur Behandlung von Werkstücken in einer Brennkammer.

(30) Priorität: **12.02.82 DE 3204995**

(43) Veröffentlichungstag der Anmeldung:
**24.08.83 Patentblatt 83/34**

(45) Bekanntmachung des Hinweises auf die Patenterteilung:
**21.08.85 Patentblatt 85/34**

(84) Benannte Vertragsstaaten:
**AT CH DE FR GB IT LI SE**

(56) Entgegenhaltungen:
**WO - A - 81/00819**
**US - A - 4 025 062**

(73) Patentinhaber: **ROBERT BOSCH GMBH, Postfach 50, D-7000 Stuttgart 1 (DE)**

(72) Erfinder: **Martini, Helmut, Dipl.-Ing., Kalkofenweg 23/3, D-7252 Well der Stadt 5 (DE)**

(74) Vertreter: **Brommer, Hans Joachim, Dr.-Ing. et al, Patentanwälte Dipl.-Ing. R. Lemcke Dr.-Ing. H.J. Brommer Amalienstrasse 28 Postfach 4026, D-7500 Karlsruhe 1 (DE)**

**Beschreibung**

Die Erfindung geht aus von einer Vorrichtung nach der Gattung des Hauptanspruchs, wie sie mit der WO-A-9 100 819 bekanntgeworden ist. Bei den besonders in Bezug genommenen, bekannten Maschinen zum thermischen Entgraten findet unter dem Einfluß von Wärme ein chemischer Prozeß statt. Beim thermischen Entgraten wird der abzutragende Werkstoff mit Sauerstoff oxidiert bzw. verbrannt. Der zum Entgraten notwendige Hitzeschock wird durch das Abbrennen eines Brenngas-Sauerstoff-Gemisches erzeugt, wobei Wasserstoff oder Erdgas bzw. Methan als Brenngas verwendet werden können. Um die notwendige Energie freisetzen zu können, muß das Gasgemisch vor dem Entzünden komprimiert werden. Dies geschieht im allgemeinen mit Hilfe von Dosierzylindern und Gaseinstoßzylindern. Bei bekannten Anlagen erfolgt die Vermischung und Zündung des Brenngas-Sauerstoff-Gemisches in einem separaten Mischblock. Bekannte Mischeinrichtungen bestehen aus einem Gehäuse, in welchem sich die Mischkammer mit Zündeinrichtung befindet. Diese Mischkammer ist über verhältnismäßig lange Kanäle (Gaszuführungsbohrungen) mit den Gaszuführungsanschlüssen am Mischblock verbunden. Die langen Gaszuführungsbohrungen, d. h. Gasvorlagen dienen dem Schutz der Ventile, die zwischen dem Mischblock und der Dosiereinrichtung angeordnet sind, beim Durchzünden des stark komprimierten Gases. Die Verbrennungstemperatur des Gases liegt im Bereich von 2500 bis 3500° C. Die in der Brennkammer auftretenden Drücke des Brenngas-Sauerstoff-Gemisches liegen bei bis zu 60 bar bei Füllung der Brennkammer.

Bei bekannten Anlagen zum thermischen Entgraten wird das zu bearbeitende Werkstück auf einen Schließteller aufgelegt und die zylindrische Entgratkammer aufgesetzt. Die Abdichtung zwischen Entgratkammer und Schließteller erfolgt durch starken Druck, z. B. mittels einer hydraulisch betätigten Kniehebelmechanik. Die Zuführung des Brenngas-Sauerstoff-Gemisches erfolgt über einen Mischblock.

Die bekannten Einrichtungen haben den Nachteil, daß das im Mischblock entzündete Brenngas-Sauerstoff-Gemisch beim Durchzünden die Gaszuführungsventile von der Gasdosieranlage erreicht. Dies hat einen gewissen Verschleiß der Ventile zur Folge. Weiterhin war ein Verschleiß an der Zündbohrung, der Gaszuführungsbohrung zur Entgratkammer unvermeidbar.

Aufgabe der Erfindung ist es, die genannten Nachteile zu vermeiden. Sie ist mit den Merkmalen des Anspruchs 1 gelöst.

Die erfindungsgemäße Vorrichtung mit den kennzeichnenden Merkmalen des Hauptanspruchs hat demgegenüber den Vorteil, daß der bisher notwendige Mischblock zur Aufbereitung und Zündung des Brenngas-Sauerstoff-Gemisches entfallen kann. Die Erfindung geht von der Erkenntnis aus, daß ein Verschleiß von Anlageteilen außerhalb der eigentlichen Brennkammer beim Zündvorgang nur dann vermieden werden kann, wenn diese Teile beim Zündvorgang von der Brennkammer vollkommen abgetrennt sind. Dabei kann die Abtrennung nicht durch herkömmliche Ventile erfolgen, da diese den auftretenden Beanspruchungen nicht widerstehen.

Durch die erfindungsgemäße Brennkammer mit einem sogenannten Tandem-Schließsystem kann das Gasgemisch bei mit dem Schließteller verschlossener äußerer Kammerwand in die Brennkammer eingeführt werden. Erst nachdem der Gasfüllvorgang der Brennkammer abgeschlossen ist, wird die Brennkammer mittels der inneren Kammerwand und dem Schließteller in an sich bekannter Weise fest verschlossen. Dies geschieht erfindungsgemäß dadurch, daß sich die äußere Kammerwand gegenüber der inneren in axialer Richtung verschieben läßt. Der beim Gasfüllvorgang entstehende Druck wird demnach durch die äußere Kammerwand in Verbindung mit dem Schließteller, der Explosionsdruck in der Brennkammer beim Zündvorgang durch die innere Kammerwand mit dem Schließteller aufgefangen. Dabei ist die Brennkammer gegenüber weiteren Anlageteilen beim Zündvorgang vollkommen hermetisch abgedichtet.

Durch die in den Unteransprüchen aufgeführten Maßnahmen ist eine vorteilhafte Weiterbildung und Verbesserung der im Hauptanspruch angegebenen Vorrichtung möglich. Besonders vorteilhaft ist die Ausbildung der äußeren Kammerwand als mechanisch, pneumatisch oder hydraulisch axial verschiebbare Hülse, die gegenüber dem Schließteller gasdicht abdichtbar ist. Die Höhe (axiale Länge) der äußeren Kammerwand kann verhältnismäßig klein gehalten werden, da sie lediglich einen Spalt zwischen der inneren Kammerwand und dem Schließteller in axialer Richtung überbrücken muß, um die Brennkammer beim Gasfüllvorgang abzudichten. Der Anpreßdruck der äußeren Kammerwand gegenüber dem Schließteller kann dabei mechanisch, pneumatisch oder hydraulisch erfolgen. Besonders einfach ist die Anordnung von Druckfedern, die die als Ring oder Hülse ausgebildete äußere Kammerwand gegen den Schließteller drücken.

Vorteilhaft ist weiterhin, daß zwischen der inneren und äußeren Kammerwand ein Kühlring angeordnet ist. Dieser an sich bekannte Kühlring enthält in Ausgestaltung der Erfindung die Zuführungsbohrungen für die einzelnen Gaskomponenten. Dabei kann der Kühlring an seinem Umfang mehrere Bohrungen zur Zuführung des Brenngases aufweisen. Entsprechend einer vorteilhaften Ausbildung der Erfindung münden die Zuführungsbohrungen für die Gaskomponenten im Zwischenraum der Arbeitskammerwände und zwar im Bereich der dem Schließteller zugewandten Seite. Das aus den Zuführungsbohrungen im Kühlring austretende Gas vermischt sich in einem Ringkanal, der durch die Kammerwände und dem Schließteller gebildet wird.

In Ausbildung der Erfindung ist weiterhin vorgesehen, daß bei gasdicht geschlossener Kammeraußenwand der Brennkammer brennbares Gasgemisch über verschließbare Zuführungsöffnungen zuführbar ist. In einfachster Ausgestaltung dieser Maßnahme ist zwischen der Kammerinnenwand und dem Schließteller ein verschließbarer Gasgemisch-Zuführungsspalt zur Brennkammer vorgesehen. Diese einfache Ausführungsform ermöglicht es, durch einfaches Zusammenfahren des Schließtellers mit der Brennkammer, daß zunächst die Kammeraußenwand den Schließteller gasdicht abdichtet, während zwischen Kammerinnenwand und Schließteller ein Zuführungsspalt für das Gasgemisch offenbleibt. Erst nachdem die Kammer die erforderliche Gasfüllung und den erforderlichen Gasdruck aufweist, wird der Schließteller weiter gegen die Brennkammer geschoben und die Kammerinnenwand wie bei herkömmlichen Brennkammern fest mit dem Schließteller verschlossen. Bei diesem zweiten Schließvorgang wird die äußere Kammerwand gegen den Druck der Feder weiter axial verschoben.

Eine Ausgestaltung der Erfindung sieht weiterhin vor, daß die Zündung des Gasgemisches im Arbeitsraum mittels einer im Bereich des Arbeitsraumes angeordneten Zündkerze oder dergleichen erfolgt. Da bei dem erfindungsgemäßen System der herkömmliche Mischblock mit Zündeinrichtung vollkommen entfallen kann, ist es vorteilhaft, die Zündkerze direkt im Bereich des Brennraumes anzuordnen. Hierbei kann es jedoch vorteilhaft sein, mittels Labyrinthgängen vor zu großer Hitzeeinwirkung und Druckbeanspruchung zu schützen.

Besonders vorteilhaft ist weiterhin, daß im Bereich der Gasaustrittsöffnung zwischen Kammeraußenwand und Schließteller eine die Arbeitskammer umgebende Gasabsaugvorrichtung vorgesehen ist. Dieser sogenannte Absaugring ermöglicht es, die entstandenen Verbrennungsgase beim Öffnen der Kammer direkt abzusaugen.

Die erfindungsgemäße Einrichtung ist selbstverständlich nicht auf eine Anlage zum thermischen Entgraten von Werkstücken beschränkt, da eine derartige Anlage zahlreiche Anwendungsgebiete hat. So kann mit der in der Beschreibung näher dargestellten Anlage ebenso z. B. das »Retikulieren von Schaumstoff« nach DE-Patent 1 504 096 oder das »Verfahren zum Entfernen von zusammenhängenden porösen Formen« nach dem DE-Patent 2 322 760 durchgeführt werden. Maßgeblich ist der Bearbeitungsvorgang an einem Werkstück mittels eines explosiven Gasgemisches in einer abgeschlossenen Kammer.

Zeichnung

Ein Ausführungsbeispiel der Erfindung ist in der Zeichnung dargestellt und in der nachfolgenden Beschreibung unter Angabe weiterer Vorteile näher erläutert. Es zeigt die

Fig. 1 ein Schnitt durch eine schematisch dargestellte Anlage zur thermischen Behandlung von Werkstücken,

Fig. 2 einen Schnitt A/B gemäß Fig. 1,

Fig. 3 eine Darstellung der Vorrichtung in geschlossenem Zustand.

Beschreibung des Ausführungsbeispiels

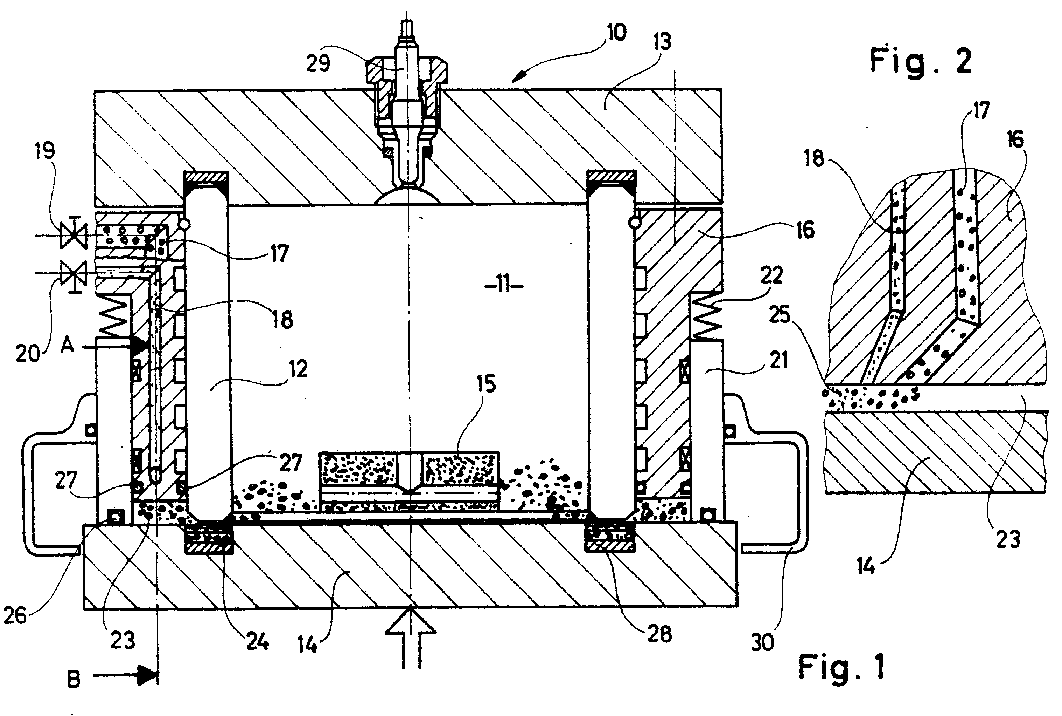

Die in Fig. 1 im Schnitt dargestellte thermische Entgratanlage 10 besteht im wesentlichen aus einer Entgratkammer 11, die durch die innere Kammerwand 12, durch das Entgratkammer-Oberteil 13 und den Schließteller 14 gebildet wird. Zum Einlegen des zu bearbeitenden Werkstücks 15 wird die Entgratkammer 11 und der Schließteller 14 in axialer Richtung voneinander getrennt. Dies kann durch Anheben des Kammeroberteils 12, 13 oder durch Senken des Schließtellers 14 geschehen. Die innere Kammerwand 12 der Entgratanlage ist derart ausgelegt, daß sie den Belastungen beim Zündvorgang in der Entgratkammer 11 standhält. Die infolge des Zündvorganges stark erwärmte Kammerinnenwand 12 wird durch einen Kühlring 16 in an sich bekannter Weise abgekühlt.

Gemäß der Erfindung weist dieser Kühlring 16 Zuführungsbohrungen 17, 18 für Sauerstoff und Brenngas auf. Der Sauerstoff wird über ein Ventil 19, das Brenngas über ein Ventil 20 der thermischen Entgratanlage 10 zugeführt.

Die thermische Entgratanlage weist erfindungsgemäß eine weitere äußere Kammerwand 21 auf, die gegenüber der inneren Kammerwand 12 und dem Kühlring 16 axial verschiebbar ist. Durch eine Druckfeder 22 wird die äußere Kammerwand in der Darstellung nach Fig. 1 nach unten gedrückt.

Der in Fig. 1 dargestellte Verfahrenszustand stellt den Gasfüllvorgang der Entgratkammer 11 dar. Hier wurde der Schließteller 14 mit dem aufgelegten Werkstück 15 bereits so weit gegen die Entgratkammer geschoben, daß die äußere Kammerwand 21 entgegen dem Druck der Feder 22 gegen den Schließteller 14 gepreßt wird. In diesem Zustand bildet sich zwischen der äußeren Kammerwand 21, der inneren Kammerwand 12, dem Kühlring 16 und dem Schließteller 14 ein Ringspalt 23, der über einen Dichtungsspalt 24 zwischen innerer Kammerwand 12 und Schließteller 14 mit der Entgratkammer 11 verbunden ist. Wie in Fig. 1 und 2 dargestellt, strömt der Sauerstoff über das Ventil 19 durch die Bohrung 17 und das Brenngas über das Ventil 20 durch die Bohrung 18 zum Ringspalt 23 und vermischt sich dort zu einem Brenngas-Sauerstoff-Gemisch 25. Die Gaszuführungsbohrungen 17, 18 sind im Bereich der Austrittsöffnung in den Ringspalten abgewinkelt ausgebildet, so daß sich eine intensive Vermischung der Gaskomponenten ergibt. Das in dem Ringspalt 23 befindliche Brenngas-Sauerstoff-Gemisch 25 gelangt über den Dichtungsspalt 24 in die Entgratkammer 11. Gegenüber der Umgebung und dem Kühlring 16 sind Dichtungen 26, 27 vorgesehen.

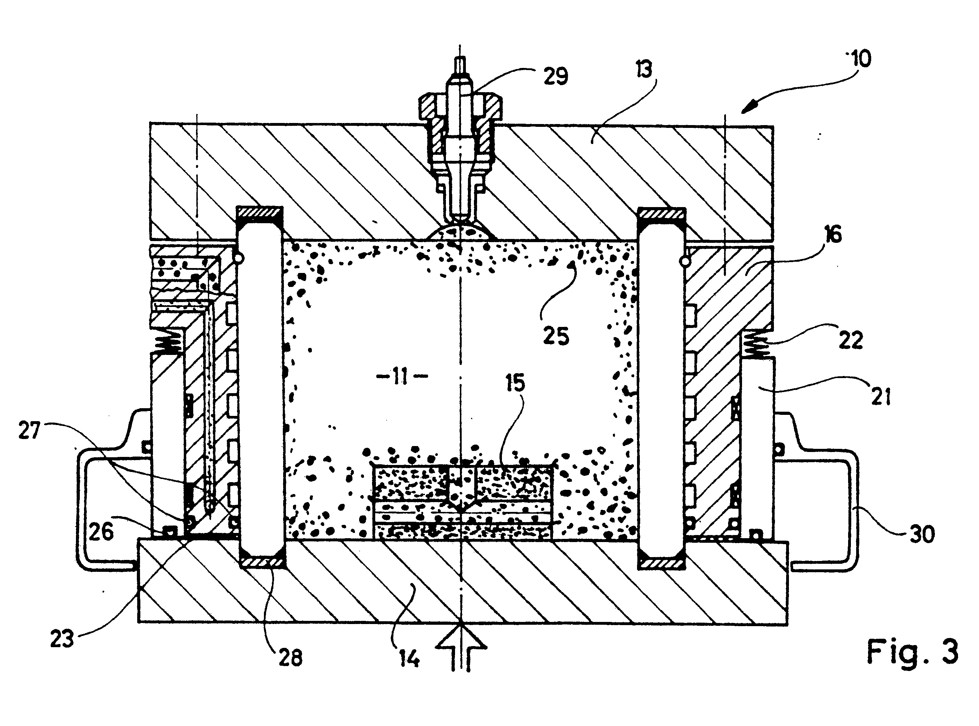

Fig. 3 zeigt den Zustand der thermischen Entgratanlage nach vollendetem Gasfüllvorgang. Hat sich in der Entgratkammer 11 der notwendige Gasgemischdruck und die notwendige Füllmenge eingestellt, so wird der Schließteller 14 gegen das Entgratkammeroberteil 12, 13 gepreßt. Die an sich bekannte Hochdruck- und Temperaturdichtung 28 schließt dann den Entgratkammerinnenraum 11 gegenüber der Umgebung ab. Die Gaszuführungsöffnung über den Ringspalt 23 und den Dichtungsspalt 24 wird damit fest verschlossen. In diesem Zustand kann die Zündung des Brenngas-Sauerstoff-Gemisches 25 durch eine Zündkerze 29 und damit die Entgratung des Werkstücks 15 erfolgen. In dem in Fig. 3 dargestellten Zustand der Anlage befindet sich die äußere Kammerwand 21 in ihrer obersten Stellung, d. h. die Druckfeder 22 ist am stärksten zusammengedrückt.

Die Dichtung 26 zwischen dem Schließteller 14 und der äußeren Kammerwand 21 muß lediglich den Fülldruck beim Gasfüllvorgang der Entgratkammer 11 gegenüber der Umgebung abdichten. Demgegenüber muß die Dichtung 28 zwischen der inneren Kammerwand 12 und dem Schließteller 14 wesentlich höheren Drücken und Temperaturen beim eigentlichen Entgratvorgang des Werkstücks standhalten.

Nach erfolgtem Entgratvorgang wird die Entgratkammer vom Schließteller 14 abgehoben, so daß das verbrannte Gas nach außen entweichen kann. Im Bereich der Trennfläche zwischen Schließteller 14 und Kammeroberteil ist eine Gasabsaugvorrichtung 30 angeordnet, um das verbrannte Gas umweltfreundlich zu entfernen.

Die Höhe des Kühlringes 16 ist so bemessen, daß gegenüber dem in die Zündstellung hochgefahrenen Schließteller nur noch ein minimaler Spalt 23 verbleibt, so daß die unverbrauchte Gasmenge vernachlässigbar ist.

**Patentansprüche**

1. Vorrichtung zur Behandlung von Werkstücken mittels Temperatur- und Druckstößen durch Zündung eines Gasgemisches, insbesondere thermische Entgratanlage, mit einer mittels eines Schließtellers (14) verschließbaren Arbeitskammer (11) mit einer Kammerwand (12) zur Aufnahme der Werkstücke, dadurch gekennzeichnet, daß der Kammerwand (12) eine zweite ihr gegenüber axial verschiebbare äußere Kammerwand (21) zugeordnet ist und daß die Arbeitskammer (11) beim Gasfüllvorgang mittels der äußeren Kammerwand (21) und beim Zündvorgang mittels der inneren Kammerwand (12) verschließbar ist.

2. Vorrichtung nach Anspruch 1, dadurch gekennzeichnet, daß der Zwischenraum zwischen der inneren Kammerwand (12) und der äußeren Kammerwand (21) als Gaszuführungsleitung für das Brenngas-Sauerstoff-Gemisch ausgebildet ist.

3. Vorrichtung nach Anspruch 1 oder 2, dadurch gekennzeichnet, daß die Abdichtung der Arbeitskammer (11) mittels einer hochtemperaturfesten und druckfesten Brennkammerdichtung (28) zwischen innerer Kammerwand (12) und Schließteller (14) erfolgt.

4. Vorrichtung nach einem der Ansprüche 1 bis 3, dadurch gekennzeichnet, daß die äußere Kammerwand (21) der Arbeitskammer (11) mechanisch, pneumatisch oder hydraulisch axial verschiebbar angeordnet und gegenüber dem Schließteller (14) gasdicht abdichtbar ist.

5. Vorrichtung nach Anspruch 4, dadurch gekennzeichnet, daß die äußere Kammerwand (21) durch Druckfedern (22) axial verschiebbar angeordnet ist.

6. Vorrichtung nach einem oder mehreren der vorhergehenden Ansprüche 1 bis 5, dadurch gekennzeichnet, daß die innere Kammerwand (12) von einem Kühlring (16) umgeben ist.

7. Vorrichtung nach Anspruch 6, dadurch gekennzeichnet, daß der Kühlring (16) Zuführungsbohrungen (17, 18) für das Brenngas-Sauerstoff-Gemisch aufweist.

8. Vorrichtung nach Anspruch 7, dadurch gekennzeichnet, daß die Zuführungsbohrungen (17, 18) für die Gaskomponenten im Zwischenraum der Arbeitskammerwände (12, 21) im Bereich der dem Schließteller (14) zugewandten Seite münden.

9. Vorrichtung nach einem oder mehreren der vorhergehenden Ansprüche 1 bis 8, dadurch gekennzeichnet, daß bei gasdicht geschlossener Kammeraußenwand (21) der Brennkammer (11) brennbares Gasgemisch über verschließbare Zuführungsöffnungen (23, 24) zuführbar sind.

10. Vorrichtung nach Anspruch 9, dadurch gekennzeichnet, daß bei gasdicht geschlossener Außenwand (21) zwischen Kammerinnenwand (12) und Schließteller (14) ein verschließbarer Gasgemisch-Zuführungsspalt (24) zur Arbeitskammer (11) vorgesehen ist.

11. Vorrichtung nach einem oder mehreren der vorhergehenden Ansprüche, dadurch gekennzeichnet, daß die Zündung des Brenngas-Sauerstoff-Gemisches im Arbeitsraum (11) mittels einer im Bereich des Arbeitsraums (11) angeordneten Zündkerze (29) oder dergleichen erfolgt.

12. Vorrichtung nach einem oder mehreren der vorhergehenden Ansprüche 1 bis 11, dadurch gekennzeichnet, daß im Bereich der Gasaustrittsöffnung zwischen Kammeraußenwand (21) und Schließteller (14) eine die Arbeitskammer (11) umgebende Gasabsaugvorrichtung (30) vorgesehen ist.

**Claims**

Device for the treatment of workpieces by means of temperature surges and pressure surges due to ignition of a gas mixture, in particular a thermal deburring system, having a work chamber (11) which can be closed off by means of a closing plate (14) and has a chamber wall (12) for receiving the workpieces, characterised in that the chamber wall (12) is assigned a second, outer chamber wall (21) which is axially displaceable with respect to it, and in that the work chamber (11) can be closed off during the gas filling operation by means of the outer chamber wall (21) and during the ignition operation by means of the inner chamber wall (12).

2. Device according to claim 1, characterised in that the intermediate space between the inner chamber wall (12) and the outer chamber wall (21) is designed as a gas supply line for the fuel gas/oxygen mixture.

3. Device according to claim 1 or 2, characterised in that the sealing off of the work chamber (11) is performed by means of a high temperature-resistant, pressure-proof combustion chamber seal (28) between inner chamber wall (12) and closure plate (14).

4. Device according to one of claims 1 to 3, characterised in that the outer chamber wall (21) of the work chamber (11) is arranged to be axially displaceable mechanically, pneumatically or hydraulically and can be sealed off gas-tight from the closing plate (14).

5. Device according to claim 4, characterised in that the outer chamber wall (21) is arranged to be axially displaceable by means of compression springs (22).

6. Device according to one or more of the preceding claims 1 to 5, characterised in that the inner chamber wall (12) is surrounded by a cooling ring (16).

7. Device according to claim 6, characterised in that the cooling ring (16) has feed bores (17, 18) for the fuel gas/oxygen mixture.

8. Device according to claim 7, characterised in that the feed bores (17, 18) for the gas components open out in the intermediate space of the work chamber walls (12, 21) in the region of the side facing the closing plate (14).

9. Device according to one or more of the preceding claims 1 to 8, characterised in that combustible gas mixture can be fed via closeable feed orifices (23, 24) when the chamber outer wall (21) of the combustion chamber (11) is closed gas-tight.

10. Device according to claim 9, characterised in that a closeable gas mixture feed gap (24) to the work chamber (11) is provided between chamber inner wall (12) and closing plate (14) when the outer wall (21) is closed gas-tight.

11. Device according to one or more of the preceding claims, characterised in that the ignition of the fuel gas/oxygen mixture in the work chamber (11) is performed by means of a spark plug (29) or the like arranged in the region of the work chamber (11).

12. Device according to one or more of the preceding claims 1 to 11, characterised in that a gas exhaust device (30) surrounding the work chamber (11) is provided in the region of the gas outlet orifice between chamber outer wall (21) and closing plate (14).

**Revendications**

1. Dispositif pour traiter des pièces à l'aide de chocs de température et de pression, par allumage d'un mélange gazeux, notamment installation d'ébarbage thermique, comportant une chambre de travail (11) susceptible d'être fermée à l'aide d'un plateau de fermeture (14), ayant une paroi de chambre (12) pour recevoir les pièces, caractérisé en ce que la paroi (12) de la chambre à laquelle est associée une seconde paroi extérieure (21) de chambre coulissante axialement par rapport à la précédente, et en ce que lors de l'opération de remplissage de gaz, la chambre de travail (11) peut être fermée à l'aide de la paroi extérieure (21) de la chambre et pour l'opération d'allumage, elle peut être, fermée à l'aide de la paroi intérieure (12) de la chambre.

2. Dispositif selon la revendication 1, caractérisé en ce que le volume intermédiaire entre la paroi intérieure (12) de la chambre et la paroi extérieure (21) de la chambre est réalisé sous la forme d'une conduite d'alimentation de gaz pour le mélange gaz combustibleoxygéne.

3. Dispositif selon la revendication 1 ou 2, caractérisé en ce que l'étanchéité de la chambre de travail (11) est réalisée à l'aide d'un joint d'étanchéité de chambre de combustion (28) résistant aux tempétures et pressions élevées, entre la paroi intérieure (12) de la chambre et le plateau de fermeture (14).

4. Dispositif selon l'une des revendications 1 à 3, caractérisé en ce que la paroi extérieure (21) de la chambre de travail (11) est montée coulissante axialement par un moyen mécanique, pneumatique ou hydraulique et peut être fermée de façon étanche au gaz vis-à-vis du plateau de fermeture (14).

5. Dispositif selon la revendication 4, caractérisé en ce que la paroi extérieure (21) de la chambre est coulissante axialement par l'intermédiaire de ressorts de compression (22).

6. Dispositif selon l'une ou plusieurs des revendications précédentes 1à 5, caractérisé en ce que le paroi intérieure (12) de la chambre est entourée par un anneau de refroidissement (16).

7. Dispositif selon la revendication 6, caractérisé en ce que l'anneau de refroidissement (16) comporte des perçages d'alimentation (17, 18) pour le mélange gaz combustible-oxygène.

8. Dispositif selon la revendication 7, caractérisé en ce que les perçages d'alimentation (17, 18) des composants du gaz débouchent dans le volume intermédiaire des parois (12, 21) de la chambre de travail au niveau du côté tourné vers le plateau de fermeture (14).

9. Dispositif selon l'une ou plusieurs des revendications précédentes 1 à 8, caractérisé en ce que pour une paroi extérieure (21) de la chambre de combustion, fermée de façon étanche au gaz, le mélange gazeux combustible est introduit par des orifices d'alimentation (23, 24) susceptibles d'être fermés.

10. Dispositif selon la revendication 9, caractérisé en ce que pour une paroi extérieure (21) fermée de façon étanche au gaz entre la paroi intérieure (12) et le plateau de fermeture (14), il est prévu un intervalle d'alimentation du mélange gazeux (24) susceptible d'être fermé vers la chambre de travail (11).

11. Dispositif selon l'une ou plusieurs des revendications précédentes, caractérisé en ce que l'allumage du mélange gaz combustible-oxygène dans le volume de travail (11) se fait à l'aide d'une bougie d'allumage (29) ou analogue prévue dans la zone de la chambre de travail (11).

12. Dispositif selon l'une ou plusieurs des revendications précédentes 1 à 11, caractérisé en ce qu'au niveau de l'orifice de sortie de gaz, il est prévu un dispositif d'aspiration de gaz (30) entourant la chambre de travail (11) entre la paroi extérieure (21) de la chambre et le plateau de fermeture (14).

Fig. 2

Fig. 1

0 086 264

Fig. 3